(19) Europäisches Patentamt
European Patent Office
Office européen des brevets

(11) **EP 3 143 294 B1**

(12) **EUROPÄISCHE PATENTSCHRIFT**

(45) Veröffentlichungstag und Bekanntmachung des Hinweises auf die Patenterteilung:
**22.01.2020 Patentblatt 2020/04**

(51) Int Cl.:
***F16B 39/24*** *(2006.01)* ***F16C 35/06*** *(2006.01)*
***F16D 1/00*** *(2006.01)*

(21) Anmeldenummer: **15718469.8**

(22) Anmeldetag: **17.04.2015**

(86) Internationale Anmeldenummer:
**PCT/EP2015/058342**

(87) Internationale Veröffentlichungsnummer:
**WO 2015/172968 (19.11.2015 Gazette 2015/46)**

(54) **VORRICHTUNG ZUM SICHERN EINES SPANNELEMENTS GEGEN UNGEWOLLTES LÖSEN**

DEVICE FOR SECURING A TENSION ELEMENT AGAINST UNINTENTIONAL RELEASE

DISPOSITIF POUR EMPÊCHER LE DÉTACHEMENT INTEMPESTIF D'UN ÉLÉMENT DE SERRAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2014 DE 102014209169**

(43) Veröffentlichungstag der Anmeldung:
**22.03.2017 Patentblatt 2017/12**

(73) Patentinhaber: **ZF Friedrichshafen AG**
**88046 Friedrichshafen (DE)**

(72) Erfinder:
• **LIST, Matthias**
**88045 Friedrichshafen (DE)**
• **DECKER, Ingo**
**88045 Friedrichshafen (DE)**
• **SELBHERR, Siegfried**
**88512 Mengen (DE)**

(56) Entgegenhaltungen:
**DE-A1-102013 213 514 DE-B- 1 255 398**
**DE-C1- 4 406 270 DE-U1- 20 110 111**

**Beschreibung**

Die Erfindung betrifft eine Vorrichtung zum Sichern eines Spannelements gegen ungewolltes Lösen, mit einer scheibenförmigen Struktur, welche von einer Bohrung axial durchsetzt ist, wobei die Struktur an einem durch die Bohrung definierten Innendurchmesser mit einem Mitnahmeprofil versehen ist, welches bei Platzierung der Struktur mit der Bohrung auf einem radial innenliegenden Bauteil in ein seitens dieses Bauteils vorgesehenes Profil eingreift und dabei eine drehfeste Koppelung der Struktur mit diesem Bauteil herstellt, und wobei die Struktur axial beidseitig mit radial verlaufenden Anlageflächen versehen ist. Des Weiteren betrifft die Erfindung eine Befestigungsanordnung, bei welcher eine vorgenannte Vorrichtung zur Anwendung kommt.

Im Bereich von Getrieben werden Wälzlager zum Teil mithilfe von Spannmuttern befestigt, welche eine ausreichende axiale Vorspannung des oder auch der hintereinanderliegenden Wälzlager verwirklichen. Dabei ist die jeweilige Spannmutter mit einem Inngewinde auf einem entsprechenden Außengewinde der jeweiligen Getriebewelle geführt und wird gegen den oder die mehreren Innenringe der Wälzlager geschraubt, bis die gewünschte Vorspannung erreicht ist. Allerdings können Mikrobewegungen in Form von geringfügigen Verdrehungen des jeweils unmittelbar benachbart liegenden und als Kopfauflagefläche der Spannmutter dienenden Innenringes zu einem ungewollten Lösen der Spannmutter führen, was dann in einem entsprechenden Verlust der Vorspannung und ggf. auch einem Totalausfall des jeweiligen Getriebes resultieren kann. Aus diesem Grund werden bei Befestigungsanordnungen von Wälzlagern häufig Vorrichtungen vorgesehen, die ein ungewolltes Lösen der jeweiligen Spannmutter unterbinden.

Aus der DE 10 2013 213 514 A1 geht eine Vorrichtung hervor, welche eine scheibenförmige Struktur aufweist. Dabei ist diese Struktur von einer Bohrung axial durchsetzt, in welche ein Mitnahmeprofil vorsteht. Das Mitnahmeprofil greift dann bei Platzierung der Struktur auf einem radial innenliegenden Bauteil in ein seitens dieses Bauteils vorgesehenes Profil ein und stellt eine drehfeste Koppelung der Struktur mit diesem Bauteil her. Dabei kommt die Vorrichtung bei einer Befestigungsanordnung für Wälzlager auf einer Getriebewelle zur Anwendung und ist zwischen einem der Wälzlager und einer Spannmutter vorgesehen, welche mit einem Innengewinde auf einem Außengewinde der Getriebewelle geführt ist. Das Mitnahmeprofil der Vorrichtung stellt dann eine drehfeste Verbindung zu der Getriebewelle her, wobei die Vorrichtung axial beidseitig an radial verlaufenden Anlageflächen einerseits mit der Spannmutter und andererseits mit einem Innenring des benachbarten Wälzlagers in Kontakt steht, um die Vorspannkraft der Spannmutter auf den Innenring des Wälzlagers zu übertragen.

Ausgehend vom vorstehend beschriebenen Stand der Technik ist es nun die Aufgabe der vorliegenden Erfindung, eine Vorrichtung zu schaffen, welche möglichst spielfrei auf einem radial innenliegenden Bauteil montiert werden kann, eine Montage dabei aber mit möglichst geringem Aufwand realisierbar ist.

Diese Aufgabe wird durch eine die Merkmale des Anspruchs 1 bzw. durch eine die Merkmale des Anspruchs 2 aufweisende Vorrichtung gelöst. Die hierauf folgenden abhängigen Ansprüche geben jeweils vorteilhafte Weiterbildungen der erfindungsgemäßen Vorrichtung wieder. Eine Befestigungsanordnung, bei welcher eine erfindungsgemäße Vorrichtung zur Anwendung kommt, geht ferner aus den Anspruch 11 hervor. Die hierauf folgenden abhängigen Ansprüche geben jeweils vorteilhafte Weiterbildungen der erfindungsgemäßen Befestigungsanordnung wieder.

Gemäß einem ersten Aspekt der Erfindung weist eine Vorrichtung eine scheibenförmige Struktur auf, welche von einer Bohrung axial durchsetzt ist. Dabei ist die Struktur an einem durch die Bohrung definierten Innendurchmesser mit einem Mitnahmeprofil versehen, welches bei Platzierung der Struktur mit der Bohrung auf einem radial innenliegenden Bauteil in ein seitens dieses Bauteils vorgesehenes Profil eingreift und dabei eine drehfeste Koppelung der Struktur mit diesem Bauteil herstellt. Zudem ist die Struktur axial beidseitig mit radial verlaufenden Anlageflächen versehen.

Gemäß einem zweiten Aspekt der Erfindung weist eine Vorrichtung eine scheibenförmige Struktur auf, welche von einer nicht kreisrunden Innenkontur axial durchsetzt ist. Dabei ist die Struktur an einer durch der Innenkontur definierten Fläche mit einem Mitnahmeprofil versehen ist, welches bei Platzierung der Struktur mit der Innenkontur auf einem radial innenliegenden Bauteil in ein seitens dieses Bauteils vorgesehenes Profil eingreift und dabei eine drehfeste Koppelung der Struktur mit diesem Bauteil herstellt. Zudem ist die Struktur axial beidseitig mit radial verlaufenden Anlageflächen versehen.

Im Sinne der Erfindung kann die scheibenförmige Struktur dabei einteilig gestaltet sein und liegt dementsprechend als ringförmiges Gebilde vor, wobei alternativ dazu auch eine mehrteilige Ausgestaltung in Betracht kommt, bei welcher die mit der Bohrung durchsetzte, scheibenförmige Struktur dann aus mehreren Ringsegmenten zusammengesetzt ist.

Im Sinne der Erfindung ist unter "axial" eine Orientierung in Richtung einer Längsmittelachse der scheibenförmigen Struktur der Sicherungsvorrichtung zu verstehen, während mit "radial" eine Orientierung in Richtung eines Radius der im Wesentlichen rotationssymmetrisch gestalteten Struktur gemeint ist. Ferner kann es sich bei "dem radial innenliegenden Bauteil" prinzipiell um ein feststehendes Bauteil oder auch ein rotierendes Bauteil, also eine Welle, handeln.

Die Erfindung umfasst nun die technische Lehre, dass eine Profilebene des Mitnahmeprofils gegenüber radialen Ebenen der Anlageflächen unter einem Winkel verkippt ist. Demnach verläuft gemäß der Erfindung eine Ebene, in welcher sich das Profil der scheibenförmigen Struktur erstreckt, unter einem Winkel zu den radial verlaufenden Anlageflächen. Wird die Vorrichtung daher mit ihrer Bohrung bzw. mit ihrer nicht kreisrunden Innenkontur auf einem radial innenliegenden Bauteil platziert und mit ihren Anlageflächen durch Kontakt mit axial beiderseits liegenden Komponenten radial ausgerichtet, so ist das an der Struktur vorgesehene Mitnahmeprofil in der Folge gegenüber einer radialen Richtung um den Winkel verkippt.

Eine derartige Ausgestaltung einer Sicherungsvorrichtung hat den Vorteil, dass aufgrund der Orientierung des Profils unter einem Winkel zu den Anlageflächen bei Vorspannen der Vorrichtung das besagte Verkippen des Mitnahmeprofils gegenüber dem Profil des radial innenliegenden Bauteils stattfindet. Dieses Verkippen hat über den Umfang betrachtet in bestimmten Bereichen ein Zusammenschieben der beiden Profile zur Folge, wodurch diese bei entsprechender Gestaltung der Profile mit ihren Flanken in diesen Bereichen aufeinander gedrückt werden. Hierdurch wird ein Flankenspiel in Umfangsrichtung reduziert und damit bei entsprechender Wahl des Winkels eine Presspassung realisiert. Da ein Übergang von einer Spielpassung zu einer Presspassung allerdings erst bei diesem Verkippen stattfindet, kann die Vorrichtung im Vorfeld mit niedrigem Aufwand auf das radial innenliegende Bauteil aufgeschoben werden. Zudem können sonstige Maßnahmen zur Minimierung eines Spiels in Umfangsrichtung, wie beispielsweise ein Verkleben, entfallen.

Im Unterschied hierzu müsste das Profil der Sicherungsvorrichtung der DE 10 2013 213 514 A1 im Hinblick auf das zugehörige Profil der Welle so gestaltet sein, dass sich bei Platzierung der Sicherungsvorrichtung auf der Welle eine Presspassung zwischen beiden Komponenten ausbildet und somit ein Spiel in Umfangsrichtung verhindert wird. Allerdings würde sich in diesem Fall das Aufschieben, bzw. die Platzierung der Sicherungsvorrichtung auf der Welle entsprechend aufwändig gestalten, so dass der Montageaufwand erhöht wäre. Andere Maßnahmen, wie beispielsweise ein Verkleben oder die Verwendung eines sonstigen Füllmaterials nach dem Aufschieben, würde die Montage und die Demontage ebenfalls aufwändiger gestalten. Bei Verwendung von Klebstoff oder einem sonstigen Füllmaterial müssen die Bauteile nach der Demontage gereinigt werden, was den Demontageaufwand zusätzlich erhöht.

Bei Anwendung der erfindungsgemäßen Vorrichtung in einer Befestigungsanordnung ist diese dann auf einer Welle als radial innenliegendes Bauteil aufgesetzt und zwischen einem Spannelement und einer weiteren Komponente platziert. Das Spannelement, bei welchem es sich bevorzugt um eine Spannmutter handelt, ist dabei ebenfalls auf der Welle geführt und spannt die Vorrichtung vor, wobei die Vorrichtung an ihren Anlageflächen einerseits mit dem Spannelement, sowie andererseits mit der Komponente in Kontakt steht und über ihr Mitnahmeprofil drehfest in ein Profil der Welle einfasst.

Das Profil der Welle ist dabei "mit Spielpassung korrespondierend" zum Mitnahmeprofil der Sicherungsvorrichtung gestaltet, wobei dabei eine Gestaltung des Profils als Gegenstück zum Mitnahmeprofil mit einer Spielpassung mit entsprechenden Toleranzen gemeint ist. Würde also die Vorrichtung ohne Vorspannung durch das Spannelement auf dem Profil der Welle platziert werden, so würde sich aufgrund der Spielpassung zwischen den beiden Profilen ein Flankenspiel einstellen. Erst bei Vorspannung der Vorrichtung ist das Mitnahmeprofil dann gegenüber dem Profil der Welle um den Winkel verkippt, wodurch ein Flankenspiel zwischen den beiden Profilen bereichsweise eliminiert ist.

Im Falle einer einteiligen Ausführung der Struktur der Vorrichtung wird diese dann von einem Wellenende her an die gewünschte Position aufgeschoben, wobei aufgrund der Einteiligkeit eine einfache Montage gegeben ist, da die Sicherungsvorrichtung nicht noch vorher zusammengesetzt werden muss. Hingegen bringt eine mehrteilige Ausführung der Sicherungsvorrichtung den Vorteil mit sich, dass diese prinzipiell auch an Stellen auf der jeweiligen Welle vorgesehen werden kann, an welchen ein Aufschieben von einem Wellenende her nicht möglich ist.

Entsprechend einer Ausführungsform der Erfindung ist das Mitnahmeprofil der Sicherungsvorrichtung durch zumindest ein Einzelprofil gebildet, von dessen in Umfangsrichtung orientierten Flanken mindestens eine Flanke einen keilartigen Verlauf aufweist. Von den in Umfangsrichtung orientierten Flanken verläuft also zumindest eine nicht mit einer gleichbleibenden Erstreckung in Umfangsrichtung. Denn nur durch eine derartige Gestaltung des Mitnahmeprofils wird bei Verwendung der Sicherungsvorrichtung in einer Befestigungsanordnung eine Verminderung eines Flankenspiels zu einem korrespondierend gestalteten Profil hervorgerufen, wenn im Zuge einer Vorspannung ein Verkippen der beiden Profile zueinander stattfindet. Unter "keilartig" ist im Sinne der Erfindung ein ebener Verlauf der jeweiligen Flanke analog einer schiefen Ebene oder auch ein gekrümmter Verlauf zu verstehen.

In Weiterbildung der vorgenannten Ausführungsform ist das Mitnahmeprofil dann als Verzahnung, insbesondere als Evolventenverzahnung, gestaltet. Hierdurch kann zum einen eine zuverlässige, drehfeste Verbindung der Vorrichtung mit dem radial innenliegenden Bauteil realisiert werden, gleichzeitig wird aber insbesondere bei der Evolventenverzahnung beim Verkippen der gewünschte, oben genannte Effekt erzielt. Abgesehen von einer Evolventenverzahnung kann eine Verzahnung aber auch anderweitig gestaltet sein, wobei allerdings an zumindest einer Zahnflanke der keilartige Verlauf realisiert sein muss. Besonders bevorzugt sind Verzahnungen nach DIN5480, ISO4156, ANSI B92.1 und Verzahnungen, die ähnlich dieser Normen ausgeführt sind, beispielsweise eine Verzahnung ähnlich "DIN5480 41.5x0.5x81x9H 9h". Ferner ist es im Sinne der Erfindung denkbar, das Mitnahmeprofil, also beispielsweise die Verzahnung, über den kompletten Umfang des Innendurchmessers der Struktur auszugestalten oder dieses nur bereichsweise vorzusehen.

Gemäß einer weiteren Ausgestaltung der Erfindung ist der Winkel derartig gewählt, dass bei Anordnung der Struktur auf dem radial innenliegenden Bauteil und Verkippen des Mitnahmeprofils gegenüber dem Profil des Bauteils in mindestens einem Umfangsbereich das Flankenspiel zwischen diesen beiden Profilen eliminiert ist. Besonders bevorzugt ist der Winkel dabei nach

$$j_n - \left[ \left( d \cdot \sin \alpha_t - \frac{j_n}{2} \right) \cdot \cos \varphi + \frac{b}{2} \cdot \sin \varphi - \left( \left( d \cdot \sin \alpha_t \right) - \frac{j_n}{2} \right) \right] \leq 0$$

berechnet. Hierbei ist $j_n$ ein Normalflankenspiel der Verzahnung, $\alpha_t$ ein Betriebseingriffswinkel, d ein Teilkreisdurchmesser und $\varphi$ der zu berechnende Winkel. Eine Berechnung des Winkels hat dabei den Vorteil, dass eine optimale Wahl des Kippwinkels im Hinblick auf die jeweilige Gestaltung der Profile getroffen werden kann.

Entsprechend einer vorteilhaften Weiterbildung der Erfindung liegt der Wert des Winkels $\varphi$ in einem Bereich zwischen 1.5° und 2.5°. Bei diesem Winkel wird insbesondere bei Gestaltung einer Verzahnung ähnlich DIN5480 N41.5x0.5x81x9Hx9h ein Verkippen der Vorrichtung bei Anwendung in einer Befestigungsanordnung erzielt, welche eine ausreichende Reduzierung eines Flankenspiels zur Folge hat. Besonders bei einem Winkel von 2° wird dabei über den Umfang betrachtet das Flankenspiel an mehreren Stellen zu null. An wie vielen Stellen über den Umfang verteilt ein Flankenspiel von null erreicht wird, hängt auch vom Werkstoff ab, insbesondere von Festigkeit, E-Modul und dem Plastifizierungsverhalten des Werkstoffs.

Es ist eine vorteilhafte Weiterbildung einer Befestigungsanordnung, dass das Mitnahmeprofil der Sicherungsvorrichtung und/oder das Profil der Welle im Zuge des Vorspannens über die Spannmutter und des Verkippens teilweise einer plastischen Verformung unterworfen ist. Mit anderen Worten wird also der Winkel so groß gewählt, dass die Profile unter elastischen und auch plastischen Verformungen aufeinandergedrückt werden. Hierdurch kann ein Flankenspiel über einen größeren Bereich in Umfangsrichtung eliminiert werden. Zur Darstellung der teilweise plastischen Verformung kann eine der beiden Komponenten, also entweder die Vorrichtung oder die Welle, aus einem Material mit geringerer Festigkeit und Härte ausgeführt werden, es können aber auch beide miteinander in Kontakt tretende Komponenten aus ein und demselben Material gefertigt sein.

In Weiterbildung der Erfindung dient die Befestigungsanordnung der Befestigung mindestens eines Wälzlagers, dessen axiale Vorspannung über das Spannelement einstellbar ist. Alternativ dazu dient die Befestigungsanordnung der Befestigung einer Komponente in Form eines Befestigungsflansches. Des Weiteren ist es im Rahmen der Erfindung jedoch auch denkbar, dass bei der Befestigungsanordnung ein Drehmoment der Welle möglichst spielfrei auf die Vorrichtung zu übertragen ist, wobei die Vorrichtung in diesem Fall dann als drehmomentübertragendes Bauteil gestaltet ist, wie beispielsweise als Zahnrad oder auch als Bremsscheibe. Prinzipiell ist also durch Verwendung einer erfindungsgemäßen Vorrichtung in einer Befestigungsanordnung einerseits eine Verdrehsicherung oder alternativ dazu auch eine spielfreie Momentenübertragung realisierbar.

Die Erfindung ist nicht auf die angegebene Kombination der Merkmale des Hauptanspruchs oder der hiervon abhängigen Ansprüche beschränkt. Es ergeben sich darüber hinaus Möglichkeiten, einzelne Merkmale, auch soweit sie aus den Ansprüchen, der nachfolgenden Beschreibung beispielhafter Ausführungsformen der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Vorteilhafte Ausgestaltungsbeispiele der Erfindung, die nachfolgend erläutert werden, sind in den Zeichnungen dargestellt. Es zeigen:

Fig. 1    eine Schnittdarstellung einer Lageranordnung einer Getriebewelle mit einer Vorrichtung entsprechend eines ersten Ausführungsbeispiels der Erfindung;

Fig. 2    eine Einzelansicht der Vorrichtung aus Fig. 1;

Fig. 3    eine Schnittansicht der Vorrichtung, geschnitten entlang der Linie A-A in Fig. 2;

Fig. 4    ein Detail der Vorrichtung aus Fig. 2;

Fig. 5    eine Schnittdarstellung eines Teils eines Getriebes, bei dem eine Vorrichtung entsprechend eines zweiten Ausführungsbeispiels der Erfindung zur Anwendung kommt;

Fig. 6A   eine Explosionsdarstellung einer aus dem Stand der Technik bekannten Gangwähleinrichtung für ein Getriebe;

Fig. 6B   eine Detailzeichnung und eine Schnittdarstellung der montierten Gangwähleinrichtung aus Fig.6A;

Fig. 7    eine sektionale Schnittdarstellung einer Gangwähleinrichtung für ein Getriebe, bei der eine Vorrichtung entsprechend eines dritten Ausführungsbeispiels der Erfindung zur Anwendung kommt;

Fig. 8    eine Einzelansicht und eine Schnittansicht der Vorrichtung aus Fig. 7;

Fig. 9A   eine sektionale Ansicht einer Wählwelle einer Gangwähleinrichtung für ein Automatgetriebe;

Fig. 9B   eine sektionale Ansicht der Wählwelle aus Fig. 9A, bei der eine Vorrichtung entsprechend eines vierten Ausführungsbeispiels der Erfindung zur Anwendung kommt; und

Fig. 10     eine Einzelansicht und eine Schnittansicht der Vorrichtung aus Fig. 9B.

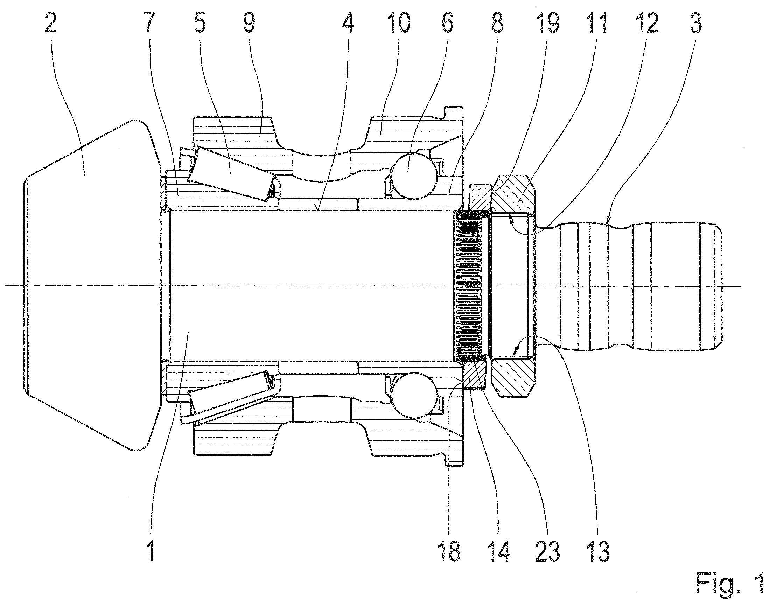

Aus Fig. 1 geht ein erstes Anwendungsbeispiel der Erfindung hervor. Fig. 1 zeigt eine Schnittansicht einer Lageranordnung einer als Kegelritzelwelle eines Getriebes ausgebildeten Welle 1. Dabei kann diese Kegelritzelwelle beispielsweise zur Verbindung einer Abtriebsseite eines Automatikgetriebes mit einem antriebsseitig des Automatikgetriebes liegenden Achsdifferenzial zur Anwendung kommen. Die Welle1 ist an einem stirnseitigen Ende mit einem Kegelritzel 2 ausgestattet, über welches dann im verbauten Zustand ein Zahneingriff mit einem Tellerrad des Achsdifferenzials hergestellt ist. Hingegen ist an einem hierzu entgegengesetzten Ende eine Steckverzahnung 3 ausgebildet.

Wie aus Fig. 1 zu erkennen ist, umfasst die Lageranordnung der Welle 1 zwei Wälzlager, die in einem axial unmittelbar auf das Kegelritzel 2 folgenden Lagersitzbereich 4 auf der Welle 1 platziert sind und in Form eines Kegelrollenlagers 5 und eines Schrägkugellagers 6 vorliegen. Beide Wälzlager verfügen dabei jeweils über je zugeordnete Innenringe 7 und 8, sowie jeweils zugehörige Außenringe 9 und 10. Eine Vorspannung der Innenringe 7 und 8 der beiden Wälzlager wird vorliegend über ein Spannelement 11 in Form einer Spannmutter sichergestellt, welche mit einem Innengewinde 12 auf einem hierzu korrespondierenden Außengewinde 13 der Welle 1 geführt ist. Dabei spannt das Spannelement 11 die Innenringe 7 und 8 gegen das Kegelritzel 2 der Welle 1 vor.

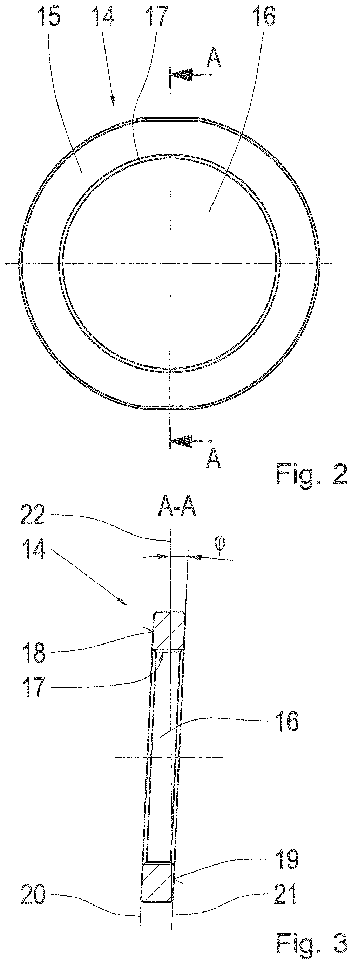

Im verbauten Zustand der Lageranordnung kann es insbesondere bei Lastwechseln dazu kommen, dass die Innenringe 7 und 8 Mikrobewegungen relativ zu der Welle 1 in Form geringfügiger Verdrehungen ausführen. Würden diese Mikrobewegungen nun auf das Spannelement 11 übertragen werden, so könnte es zu einem Lösen des Spannelements 11 und damit einem Verlust der Vorspannung kommen. Um diese Verdrehung deshalb nicht auf das Spannelement 11 zu übertragen, ist axial zwischen dem Schrägkugellager 6 und dem Spannelement 11 eine Vorrichtung 14 platziert, welche drehfest auf der Welle 1 angeordnet ist und deren genauerer Aufbau nun unter Zuhilfenahme der weiteren Ansichten der Fig. 2 bis 4 im Folgenden näher beschrieben werden soll: Wie hierbei zu erkennen ist, ist die Vorrichtung 14 durch eine einteilige, scheibenförmige Struktur 15 gebildet, welche mit einer Bohrung 16 durchsetzt ist und daher insgesamt eine Ringform bildet. Innerhalb der Lageranordnung in Fig. 1 ist die Vorrichtung 14 mit der Bohrung 16 auf die Welle 1 aufgesetzt, wobei eine drehfeste Verbindung mit der Welle 1 mittels eines Mitnahmeprofils 17 realisiert wird, welches an einem durch die Bohrung 16 definierten Innendurchmesser der Struktur 15 ausgestaltet ist.

Wie ferner aus der Schnittansicht der Vorrichtung 14 in Fig. 3 zu erkennen ist, verfügt die Vorrichtung 14 axial beidseitig über Anlageflächen 18 und 19, von denen innerhalb der Lageranordnung in Fig. 1 die Anlagefläche 18 einen Kontakt der Vorrichtung 14 zum Innenring 8 und die Anlagefläche 19 einen Kontakt zum Spannelement 11 herstellt. Die Anlageflächen 18 und 19 verlaufen dabei radial in je zugehörigen Ebenen 20 und 21 und sind parallel zueinander ausgerichtet.

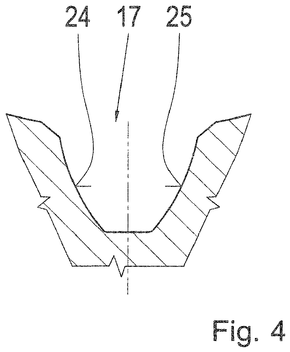

Als Besonderheit verläuft nun eine Profilebene 22, entlang welcher sich das Mitnahmeprofil 17 erstreckt, unter einem Winkel φ sowohl zu der Ebene 20 als auch der Ebene 21. In der Folge ist das Mitnahmeprofil 17 aus der Radialen um den Winkel φ verkippt, wobei der Winkel φ dabei vorliegend beispielhaft im Bereich 1,5° bis 2.5° liegt. Des Weiteren ist das Mitnahmeprofil 17, wie anhand des Details in Fig. 4 für die Vorrichtung 14 zu erkennen ist, als Evolventenverzahnung gestaltet, welche sich in Umfangsrichtung über den kompletten, durch die Bohrung 16 definierten Innendurchmesser der Struktur 15 erstreckt. Der Winkel φ ist entsprechend der Formel

$$j_n - \left[ \left( d \cdot \sin\alpha_t - \frac{j_n}{2} \right) \cdot \cos\varphi + \frac{b}{2} \cdot \sin\varphi - \left( \left( d \cdot \sin\alpha_t \right) - \frac{j_n}{2} \right) \right] \le 0$$

berechnet, wobei hierbei $j_n$ ein Normalflankenspiel der Evolventenverzahnung, $\alpha_t$ einen Betriebseingriffswinkel der Evolventenverzahnung und d einen Teilkreisdurchmesser der Verzahnung bilden.

Wird nun die Lageranordnung in Fig. 1 montiert, so wird nach Platzierung der beiden Wälzlager auf dem Lagersitzbereich 4 die Vorrichtung 14 auf die Welle 1 aufgefädelt. Seitens der Welle 1 ist dabei ein zum Mitnahmeprofil 17 korrespondierendes Profil 23 ausgestaltet, d. h. eine zu der Evolventenverzahnung der Vorrichtung 14 passende Evolventenverzahnung. Das Profil 23 der Welle 1 ist aber in radialer Richtung ausgerichtet und damit im Unterschied zu der Vorrichtung 14 nicht um einen Winkel verkippt. Zudem sind das Mitnahmeprofil 17 und das Profil 23 zueinander so ausgelegt, dass eine Spielpassung vorherrscht und die Vorrichtung 14 dementsprechend leicht aufgefädelt werden kann.

Wird nun allerdings das Spannelement 11 auf die Welle 1 aufgeschraubt und gelangt mit der Anlagefläche 19 der Vorrichtung 14 in Kontakt, so wird die Vorrichtung 14 im Folgenden auch mit ihrer Anlagefläche 18 an den Innenring 8 angedrückt. Da die beiden Anlageflächen 18 und 19 aber zu der Profilebene 22 des Mitnahmeprofils 17 unter dem Winkel φ verlaufen, hat das Einspannen der Vorrichtung 14 zwischen Innenring 8 und Spannelement 11 ein Verkippen des Mitnahmeprofils 17 zum Profil 23 der Welle 1 um den Winkel φ zur Folge. Aufgrund dieses Verkippens werden Flanken 24 und 25 des Mitnahmeprofils 17, welche in Fig. 4 zu erkennen sind, über den Umfang betrachtet in Bereichen an - vorliegend nicht weiter im Detail dargestellte - Flanken des Profils 23 gedrückt und daher in diesen Bereichen ein Flankenspiel auf 0 und auch auf kleiner 0 reduziert. Dabei geht die beim Auffädeln der Vorrichtung 14 vorherrschende Spielpassung in einigen umfangsrichtungsseitigen Abschnitten in Presspassungen über.

Der Winkel φ ist vorliegend dabei so groß gewählt, dass die Ausbildung von Presspassungen über möglichst große Bereiche in Umfangsrichtung stattfindet, wobei es hierbei seitens der Vorrichtung 14 und ggf. auch der Welle 1 neben elastischen Verformungen teilweise aufgrund des gewählten Winkels φ auch zu plastischen Verformungen kommt. Aufgrund der Ausbildung von Presspassungen kann sich die Vorrichtung 14 im Folgenden nicht mehr gegenüber der Welle 1 verdrehen, so dass auch keinerlei Mikrobewegungen auf das Spannelement 11 übertragen werden können.

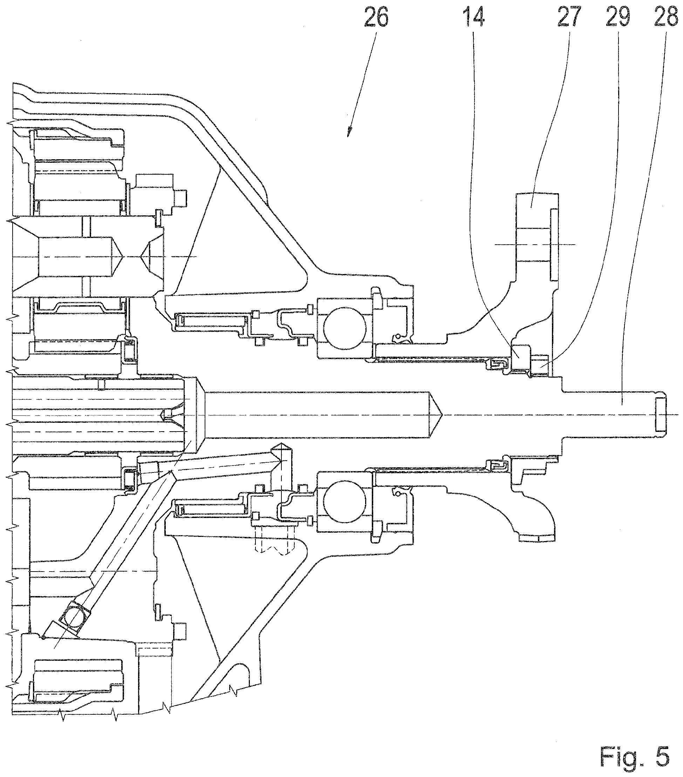

Aus Fig. 5 geht ein zweites Anwendungsbeispiel der Erfindung hervor. Fig. 5 zeigt eine Schnittansicht eines Teils eines Getriebes 26, bei welchem ein Befestigungsflansch 27 auf einer als Abtriebswelle ausgeführten Welle 28 befestigt ist. Die Befestigung ist dabei über ein als Spannmutter ausgebildetes Spannelement 29 unter Zuhilfenahme der Vorrichtung 14 vollzogen, wobei die Art und Weise der Ausbildung der Befestigung prinzipiell der zu den Fig. 1 bis 4 beschriebenen Variante entspricht. Insofern wird auf das hierzu Beschriebene Bezug genommen.

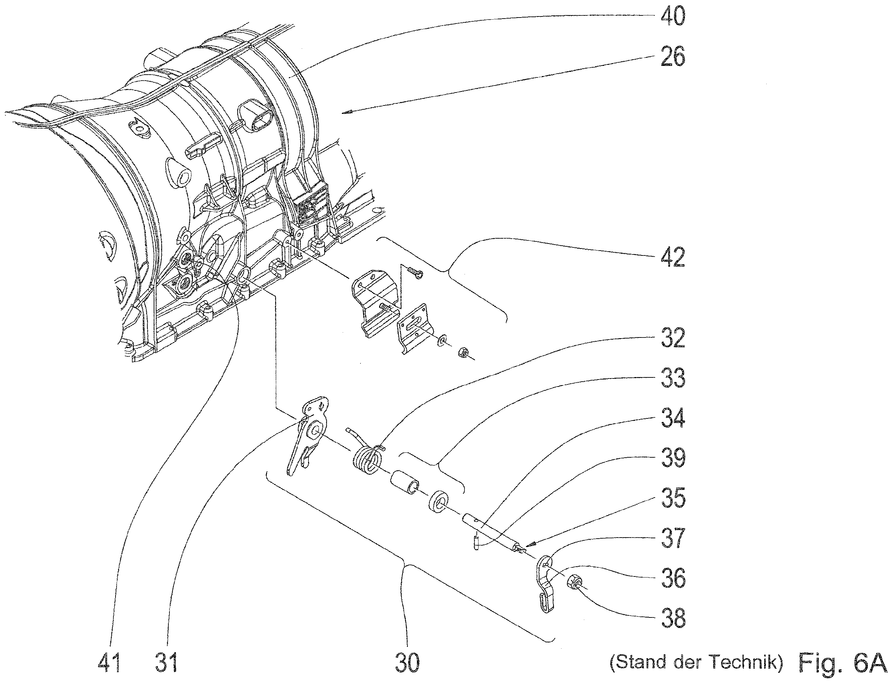

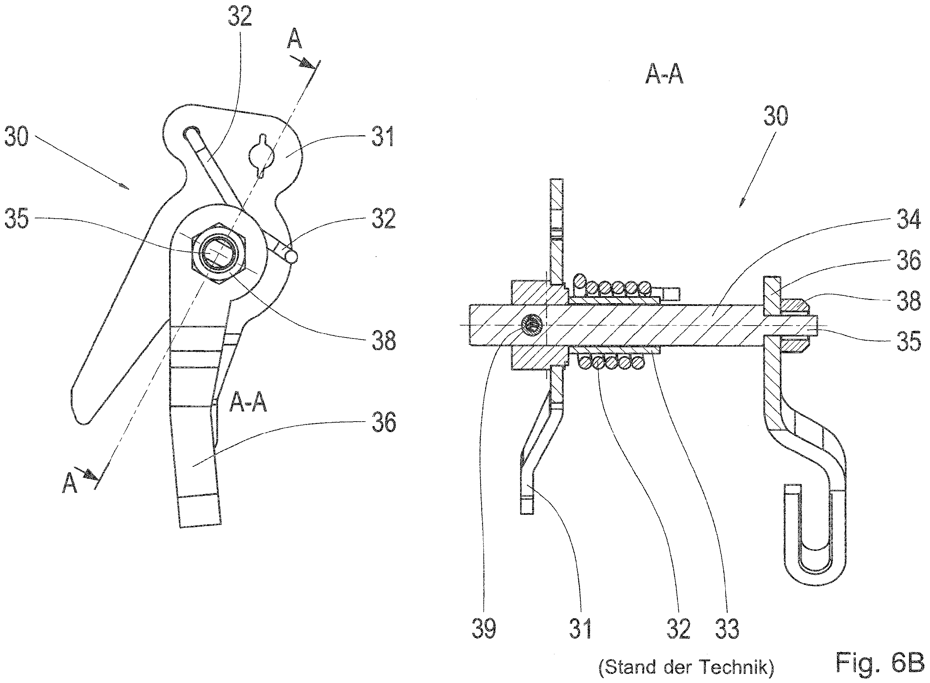

Fig. 6A zeigt eine Explosionsdarstellung einer aus dem Stand der Technik bekannten Gangwähleinrichtung 30 für ein Automatgetriebe 26; Fig. 6B zeigt eine Detailzeichnung und eine Schnittdarstellung dieser Gangwähleinrichtung 30 im montierten Zustand. Die Gangwähleinrichtung 30 umfasst eine Rastenscheibe 31, eine Feder 32, eine Lagerung 33, eine als Wählwelle ausgebildete Welle 34, einen Wählhebel 36, ein Spannelement 38 und einen Spannstift 39. Der Rastenscheibe 31 ist auf die Welle 34 aufgesteckt, wobei der Spannstift 39 eine formschlüssige Verbindung zwischen Rastenscheibe 31 und Welle 34 herstellt. Die ebenfalls auf die Welle 34 aufgesteckte Feder 32 ist über die Lagerung 33 auf der Welle 34 gelagert und greift mit einen ihrer beiden Enden formschlüssig in die Rastenscheibe 31 ein. An dem der Rastenscheibe 31 gegenüberliegenden Ende der Welle 34 ist ein Mitnahmeprofil 35 vorgesehen, auf das der Wählhebel 36 aufgesteckt ist. Hierzu weist der Wählhebel 36 eine zum Mitnahmeprofil 35 korrespondierende Ausnehmung 37 auf. Gegen Lösen des Wählhebels 36 von der Welle 34 ist das als Spannmutter ausgebildete Spannelement 38 auf ein entsprechendes Außengewinde des Mitnahmeprofils 35 aufgeschraubt.

In dem Ausführungsbeispiel ist das Mitnahmeprofil 35 als ein aus dem Stand der Technik bekanntes, so genanntes "Zweiflach-Profil" ausgebildet, bei dem das am Ende der Wählwelle 35 vorgesehene, zum Innengewinde der Spannmutter 38 korrespondierende Außengewinde achsparallel zur Mittelachse der Wählwelle 34 partiell derart abgefräst ist, das sich links und rechts der Wählwellen-Mittelachse je eine plane Fläche ergibt, wobei diese beiden Flächen parallel zueinander ausgerichtet sind. In Grunde genommen ist ein derartiges "Zweiflach-Profil" eine Passverzahnung mit einem Zahn und einem Eingriffswinkel von 0 Grad.

Im montierten Zustand durchdringt die Welle 34 eine Gehäusebohrung 41 eines Getriebegehäuses 40, derart, dass Rastenscheibe 31, Feder 32 und Lagerung 33 räumlich gesehen im Innenraum des Getriebegehäuses 40 angeordnet sind, während Wählhebel 36 und Spannelement 38 räumlich gesehen außerhalb des Getriebegehäuses 40 angeordnet sind. Dabei spannt die Feder 32 die Rastenscheibe 31 gegenüber dem Getriebegehäuse 40 vor. Zum Betätigen der Gangwähleinrichtung 30 ist ein hier nicht näher dargestellter Bowdenzug vorgesehen, dessen freies Ende in den Wählhebel 36 eingreift und dessen Außenhülle sich über einen Bowdenzughalter 42 am Getriebegehäuse 40 abstützt.

In der Praxis können Vibrationen des Getriebegehäuses 40 bzw. des Automatgetriebes 26 zum unerwünschten Lockern der Spannmutter 38 auf dem Gewinde der Wählwelle 34 führen, mit der Folge, dass die Verbindung zwischen Wählwelle 34 und Wählhebel 36 spielbehaftet wird, wodurch die mechanische Übertragung des vom Fahrer in den Bowdenzug eingeleiteten Schaltbefehls zu der im Automatgetriebe 26 zur Fahrbereichs- und Ganganwahl vorgesehenen Rastenscheibe 31 in unerwünschter Weise ungenau wird.

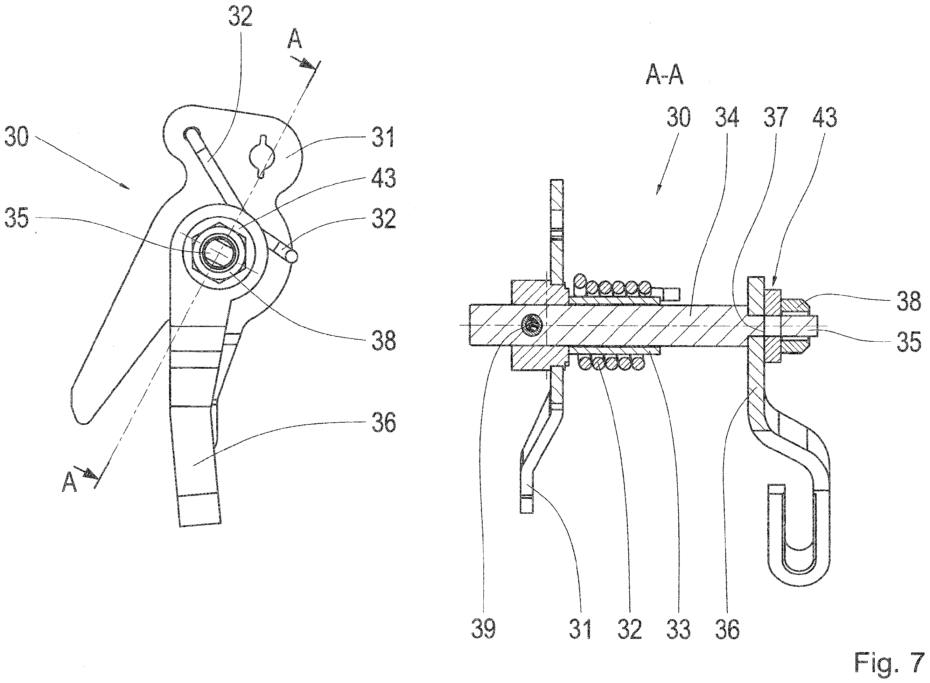

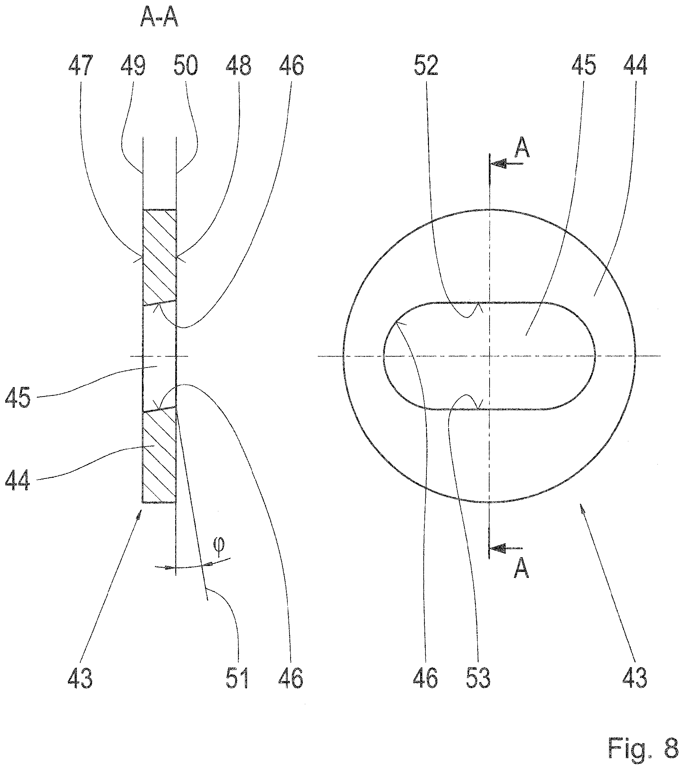

Aus Fig. 7 geht ein drittes Anwendungsbeispiel der Erfindung hervor. Fig. 7 zeigt eine sektionale Schnittdarstellung einer Gangwähleinrichtung 30 für ein Automatgetriebe, die auf der Konstruktion der aus Fig. 6A / 6B bekannten Gangwähleinrichtung 30 basiert. Dabei zeigt Fig. 7 die Gangwähleinrichtung 30 im montierten Zustand, wobei zur Vereinfachung der Darstellung das Getriebegehäuse, das von der Wählwelle 34 durchdrungen wird, in der Zeichnung weggelassen wurde. Im Unterschied zu Fig. 6A / 6B ist die kraftschlüssige Schraubverbindung zwischen Spannelement 38 und Welle 34 durch die erfindungsgemäße Vorrichtung 43 gegen unbeabsichtigtes Lösen gesichert. Dabei verspannt die Vorrichtung 43 aufgrund ihrer Verkippung um den Winkel φ das als Spannmutter ausgebildete Spannelement 38 gegenüber dem Wählhebel 36, wobei die Art und Weise der Ausbildung der Befestigung prinzipiell der zu den Fig. 1 bis 4 beschriebenen Variante entspricht. Fig.8 zeigt eine vergrößerte Darstellung (Ansicht und Schnitt) der in Fig. 7 zur Anwendung gelangenden erfindungsbemäßen Vorrichtung 43.

Wie hierbei zu erkennen ist, ist die Vorrichtung 43 durch eine einteilige, scheibenförmige Struktur 44 gebildet, welche in axialer Richtung mit einer Innenkontur 45 durchsetzt ist. Innerhalb der Gangwähleinrichtung 30 ist die Vorrichtung 43 mit ihrer Innenkontur 45 auf die als Wählwelle ausgeführte Welle 34 aufgesetzt, wobei eine drehfeste Verbindung mit der Welle 34 mittels eines Mitnahmeprofils 46 realisiert wird, welches an der Innenkontur 45 der Struktur 44 ausgestaltet ist.

Die Vorrichtung 43 verfügt axial beidseitig über Anlageflächen 47 und 48, von denen innerhalb der Gangwähleinrichtung 30 die Anlagefläche 47 einen Kontakt der Vorrichtung 43 zum Wählhebel 36 und die Anlagefläche 48 einen Kontakt zum Spannelement 38 herstellt. Die Anlageflächen 47 und 48 verlaufen dabei radial in je zugehörigen Ebenen 49 und 50 und sind parallel zueinander ausgerichtet.

Als Besonderheit verläuft nun eine Profilebene 51, entlang welcher sich das Mitnahmeprofil 46 erstreckt, unter einem Winkel φ sowohl zu der Ebene 49 als auch der Ebene 50. In der Folge ist das Mitnahmeprofil 46 aus der Radialen um den Winkel φ verkippt, wobei der Winkel φ dabei vorliegend beispielhaft im Bereich 1,5° bis 2.5° liegt. Anders formuliert bedeutet dies, dass die Mittelachse des Mitnahmeprofils 46 gegenüber der Mittelachse der scheibenförmigen Struktur 44 um den Winkel φ verkippt ist.

Im Rahmen der Montage der Gangwähleinrichtung 30 wird zunächst die Wählwelle 35 mit der Rastenscheibe 31, dem Spannstift 39, der Lagerung 33 und der Feder 33 komplettiert. Anschließend wird die vormontierte Wählwelle 34 vom Innenraum des Getriebegehäuses her durch die entsprechende Getriebegehäusebohrung hindurchgeschoben, sodass das mit dem Profil 35 versehene Wellenende der Wählwelle 34 außerhalb des Getriebegehäuses liegt. Danach wird der Wählhebel 36 auf das freie Wellenende der Wählwelle 34 aufgesteckt. Seitens des Wählhebels 36 ist hierzu eine zum Zwei-Flach-Profil 35 der Wählwelle 34 korrespondierende Ausnehmung 37 ausgebildet. Anschließend wird die Vorrichtung 43 auf das freie Wellenende der Wählwelle 34 aufgefädelt. Seitens der Wählwelle 34 ist hierzu das zur Innenkontur 46 der Vorrichtung 43 korrespondierende Profil 35 ausgebildet, im vorliegenden Anwendungsbeispiel ein zum Mitnahmeprofil 46 der Vorrichtung 43 passendes Zweiflach-Profil. Das Profil 35 der Wählwelle 34 ist aber in radialer Richtung ausgerichtet und damit im Unterschied zu der Vorrichtung 43 nicht um einen Winkel verkippt. Zudem sind das Mitnahmeprofil 46 und das Profil 35 zueinander so ausgelegt, dass eine Spielpassung vorherrscht und die Vorrichtung 43 dementsprechend leicht aufgefädelt werden kann.

Wird nun im Rahmen der Montage der Gangwähleinrichtung 30 das Spannelement 38 auf die Welle 34 aufgeschraubt, so gelangt das Spannelement 38 mit der Anlagefläche 48 der Vorrichtung 43 in Kontakt und drückt im Folgenden die Vorrichtung 43 mit ihrer Anlagefläche 47 an den Wählhebel 36 an. Da die beiden Anlageflächen 47 und 48 aber zu der Profilebene 51 des Mitnahmeprofils 46 unter dem Winkel φ verlaufen, hat das Einspannen der Vorrichtung 43 zwischen Wählhebel 36 und Spannelement 38 ein Verkippen des Mitnahmeprofils 46 der Vorrichtung 43 zum Profil 35 der Wählwelle 34 um den Winkel φ zur Folge, wobei sich der Wählhebel 36 seinerseits an einer Anlageschulter der Wählwelle 34 abstützt. Aufgrund dieses Verkippens werden Flanken 52 und 53 des Mitnahmeprofils 46 zumindest abschnittsweise an Flanken des Profils 35 gedrückt und daher in diesen Bereichen ein Flankenspiel eliminiert. Dabei geht die beim Auffädeln der Vorrichtung 43 vorherrschende Spielpassung in einigen umfangsrichtungsseitigen Abschnitten in Presspassungen über.

Der Winkel φ ist vorliegend dabei so groß gewählt, dass die Ausbildung von Presspassungen über möglichst große Bereiche der Flanken 52, 53 stattfindet, wobei es hierbei seitens der Vorrichtung 43 und ggf. auch der Welle 34 neben elastischen Verformungen teilweise aufgrund des gewählten Winkels φ auch zu plastischen Verformungen kommen kann. Aufgrund der Ausbildung von Presspassungen kann sich die Vorrichtung 43 im Folgenden nicht mehr gegenüber der Welle 34 verdrehen, so dass auch keinerlei Mikrobewegungen auf das Spannelement 38 übertragen werden können.

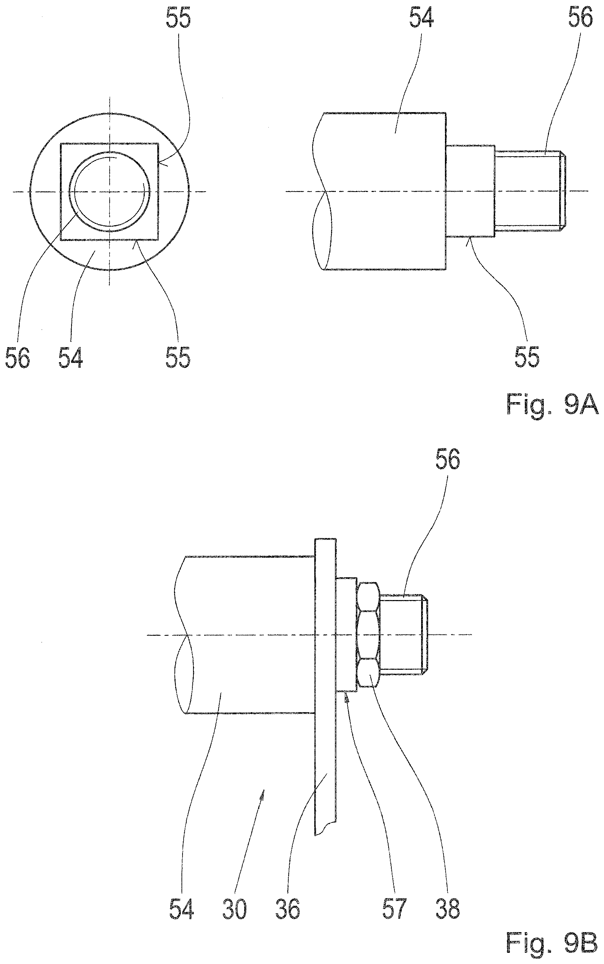

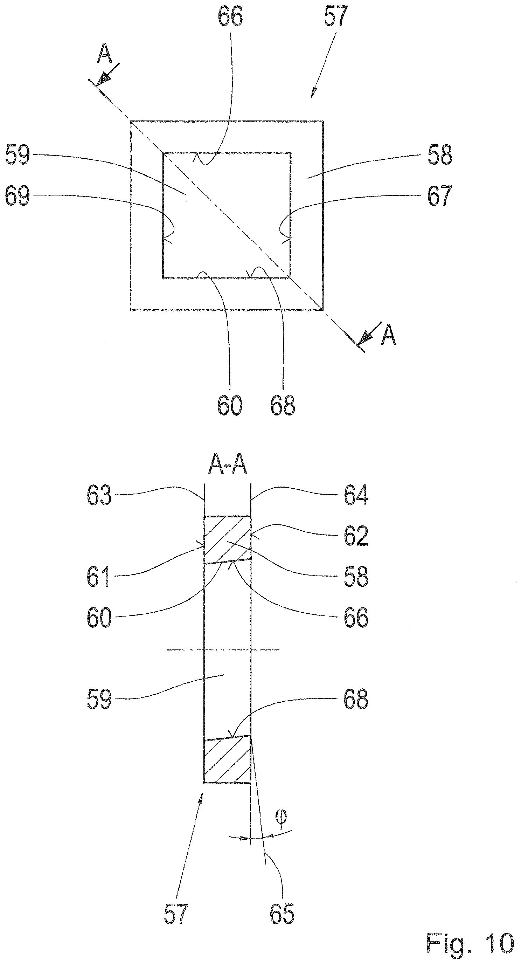

Anhand der Figuren 9A, 9B und 10 wird nachfolgend ein viertes Anwendungsbeispiel der Erfindung näher erläutert. Fig. 9A und Fig. 9B zeigen einen Ausschnitt einer Ansicht einer als Wählwelle ausgebildeten Welle 54, die alternativ zu der in Fig. 7 vorgesehenen Welle 34 bei der in Fig. 7 dargestellten Gangwähleinrichtung 30 zum Einsatz kommen kann. In Fig. 9A ist die Wählwelle 54 als Einzelteil dargestellt. In Fig. 9B ist die Wählwelle 54 im montierten Zustand zusammen mit dem Wählhebel 36, der erfindungsgemäßen Vorrichtung 57 und dem als Spannmutter ausgebildeten Spannelement 38 dargestellt. Das zum Aufschrauben der Spannmutter 38 an der Wählwelle 54 vorgesehene (Außen-)Gewinde ist mit 56 bezeichnet. Im Unterschied zu Fig. 7, in der das zur formschlüssigen Aufnahme von Wählhebel 36 und Vorrichtung 43 an der Wählwelle 34 vorgesehene Profil 35 als so genanntes "Zwei-Flach-Profil" ausgebildet ist, ist in Fig. 9A / Fig. 9B zur formschlüssigen Aufnahme von Wählhebel 36 und Vorrichtung 54 an der Wählwelle 54 ein Profil 55 vorgesehen, das als so genanntes "Vierkant-Profil" ausgebildet ist. Im Grunde genommen ist ein derartiges "Vierkant-Profil" eine Passverzahnung mit vier Zähnen und einem Eingriffswinkel von 45 Grad. Fig. 10 zeigt in Ansicht und Schnitt-Darstellung die in Fig. 9B zur Anwendung gelangende erfindungsgemäße Vorrichtung 57 als Einzelteil.

Wie hierbei zu erkennen ist, ist die Vorrichtung 57 durch eine einteilige, scheibenförmige Struktur 58 gebildet, welche eine quadratisch eckige Außenkontur aufweist und in axialer Richtung mit einer vierkantförmigen Innenkontur 59 durchsetzt ist. Innerhalb der Gangwähleinrichtung ist die Vorrichtung 57 mit ihrer Innenkontur 59 auf die als Wählwelle ausgeführte Welle 54 aufgesetzt, wobei eine drehfeste Verbindung mit der Welle 54 mittels eines Mitnahmeprofils 60 realisiert wird, welches an der Innenkontur 59 der Struktur 58 ausgestaltet ist.

Die Vorrichtung 57 verfügt axial beidseitig über Anlageflächen 61 und 62, von denen innerhalb der Gangwähleinrichtung die Anlagefläche 61 einen Kontakt der Vorrichtung 57 zum Wählhebel 36 und die Anlagefläche 62 einen Kontakt zum Spannelement 38 herstellt. Die Anlageflächen 61 und 62 verlaufen dabei radial in je zugehörigen Ebenen 63 und 64 und sind parallel zueinander ausgerichtet.

Als Besonderheit verläuft nun eine Profilebene 65, entlang welcher sich das Mitnahmeprofil 60 erstreckt, unter einem Winkel φ sowohl zu der Ebene 63 als auch der Ebene 64. In der Folge ist das Mitnahmeprofil 60 aus der Radialen um den Winkel φ verkippt, wobei der Winkel φ dabei vorliegend beispielhaft im Bereich 1,5° bis 2.5° liegt. Anders formuliert bedeutet dies, dass die Mittelachse des Mitnahmeprofils 60 gegenüber der Mittelachse der scheibenförmigen Struktur 57 um den Winkel φ verkippt ist.

Im Rahmen der Montage der Gangwähleinrichtung wird die mit Rastenscheibe, Spannstift, Lagerung und Feder 33 komplettierte Wählwelle 54 vom Innenraum des Getriebegehäuses her durch die entsprechende Getriebegehäusebohrung hindurchgeschoben, sodass das mit dem Profil 55 und dem Gewinde 56 versehene Wellenende der Wählwelle 54 außerhalb des Getriebegehäuses liegt. Danach wird der Wählhebel 36 auf das freie Wellenende der Wählwelle 54 aufgesteckt. Seitens des Wählhebels 36 ist hierzu eine zum Vierkant-Profil 55 der Wählwelle 54 korrespondierende Ausnehmung ausgebildet. Anschließend wird die Vorrichtung 57 auf das freie Wellenende der Wählwelle 54 aufgefädelt. Seitens der Wählwelle 54 ist hierzu das zur Innenkontur 59 der Vorrichtung 57 korrespondierende Profil 55 ausgebildet, im vorliegenden Anwendungsbeispiel ein zum Mitnahmeprofil 60 der Vorrichtung 57 passendes Vierkant-Profil. Das Profil 55 der Wählwelle 54 ist aber in radialer Richtung ausgerichtet und damit im Unterschied zu der Vorrichtung 57 nicht um einen Winkel verkippt. Zudem sind das Mitnahmeprofil 60 und das Profil 55 zueinander so ausgelegt, dass eine Spielpassung vorherrscht und die Vorrichtung 57 dementsprechend leicht aufgefädelt werden kann.

Wird nun im Rahmen der Montage der Gangwähleinrichtung das Spannelement 38 auf die Welle 54 aufgeschraubt, so gelangt das Spannelement 38 mit der Anlagefläche 62 der Vorrichtung 57 in Kontakt und drückt im Folgenden die Vorrichtung 57 mit ihrer Anlagefläche 61 an den Wählhebel 36 an. Da die beiden Anlageflächen 61 und 62 aber zu der Profilebene 65 des Mitnahmeprofils 60 unter dem Winkel φ verlaufen, hat das Einspannen der Vorrichtung 57 zwischen Wählhebel 36 und Spannelement 38 ein Verkippen des Mitnahmeprofils 60 der Vorrichtung 57 zum Profil 55 der Wählwelle 54 um den Winkel φ zur Folge, wobei sich der Wählhebel 36 seinerseits an einer Anlageschulter der Wählwelle 54 abstützt. Aufgrund dieses Verkippens werden Flanken 66, 67, 68 und 69 des Mitnahmeprofils 60 zumindest abschnittsweise an Flanken des Profils 55 gedrückt und daher in diesen Bereichen ein Flankenspiel eliminiert. Dabei geht die beim Auffädeln der Vorrichtung 57 vorherrschende Spielpassung in einigen umfangsrichtungsseitigen Abschnitten in Presspassungen über.

Der Winkel φ ist vorliegend dabei so groß gewählt, dass die Ausbildung von Presspassungen über möglichst große Bereiche der Flanken 66, 67, 68, 69 stattfindet, wobei es hierbei seitens der Vorrichtung 57 und ggf. auch der Welle 54 neben elastischen Verformungen teilweise aufgrund des gewählten Winkels φ auch zu plastischen Verformun-gen kommen kann. Aufgrund der Ausbildung von Presspassungen kann sich die Vorrichtung 57 im Folgenden nicht mehr gegenüber der Welle 54 verdrehen, so dass auch keinerlei Mikrobewegungen auf das Spannelement 38 übertragen werden können.

Mittels der erfindungsgemäßen Ausgestaltung einer Vorrichtung kann somit ein Sichern eines Spannelements gegen ungewolltes Lösen auf zuverlässige Art und Weise mit gleichzeitig niedrigem Montageaufwand realisiert werden. Abgesehen von einer Verliersicherung kann eine erfindungsgemäße Vorrichtung aber auch als drehmomentübertragendes Bauteil, wie beispielsweise als Zahnrad oder Bremsscheibe, gestaltet sein, wobei in diesem Fall die erfindungsgemäße Ausgestaltung einer Vorrichtung zur Bildung einer Pressverbindung mit der hiermit gekoppelten Welle verwendet wird.

Bezugszeichen

| 1 | Welle; Kegelritzelwelle |
|---|---|
| 2 | Kegelritzel |
| 3 | Steckverzahnung |
| 4 | Lagersitzbereich |
| 5 | Kegelrollenlager |
| 6 | Schrägkugellager |
| 7 | Innenring |
| 8 | Innenring |
| 9 | Außenring |
| 10 | Außenring |
| 11 | Spannelement; Spannmutter |
| 12 | Innengewinde |
| 13 | Außengewinde |
| 14 | Vorrichtung |
| 15 | Struktur |

| 16 | Bohrung |
|----|---------|
| 17 | Mitnahmeprofil |
| 18 | Anlagefläche |
| 19 | Anlagefläche |
| 20 | Ebene |
| 21 | Ebene |
| 22 | Profilebene |
| 23 | Profil; Zahnprofil |
| 24 | Flanke |
| 25 | Flanke |
| 26 | Getriebe; Automatgetriebe |
| 27 | Befestigungsflansch |
| 28 | Welle; Abtriebswelle |
| 29 | Spannelement; Spannmutter |
| 30 | Gangwähleinrichtung |
| 31 | Rastenscheibe |
| 32 | Feder |
| 33 | Lagerung |
| 34 | Welle, Wählwelle |
| 35 | Profil; Zwei-Flach-Profil |
| 36 | Wählhebel |
| 37 | Ausnehmung |
| 38 | Spannelement; Spannmutter |
| 39 | Spannstift |
| 40 | Getriebegehäuse |
| 41 | Getriebegehäusebohrung |
| 42 | Bowdenzughalter |
| 43 | Vorrichtung |
| 44 | Struktur |
| 45 | Innenkontur |
| 46 | Mitnahmeprofil |
| 47 | Anlagefläche |
| 48 | Anlagefläche |
| 49 | Ebene |
| 50 | Ebene |
| 51 | Profilebene |
| 52 | Flanke |
| 53 | Flanke |
| 54 | Welle, Wählwelle |
| 55 | Profil; Vierkant-Profil |
| 56 | Gewinde |
| 57 | Vorrichtung |
| 58 | Struktur |
| 59 | Innenkontur |
| 60 | Mitnahmeprofil |
| 61 | Anlagefläche |
| 62 | Anlagefläche |
| 63 | Ebene |
| 64 | Ebene |
| 65 | Profilebene |
| 66 | Flanke |
| 67 | Flanke |
| 68 | Flanke |
| 69 | Flanke |
| $\varphi$ | Winkel |

**EP 3 143 294 B1**

**Patentansprüche**

1. Vorrichtung (14) zum Sichern eines Spannelements (11; 29) gegen ungewolltes Lösen, mit einer scheibenförmigen Struktur (15), welche von einer Bohrung (16) axial durchsetzt ist, wobei die Struktur (15) an einem durch die Bohrung (16) definierten Innendurchmesser mit einem Mitnahmeprofil (17) versehen ist, welches bei Platzierung der Struktur (15) mit der Bohrung (16) auf einem radial innenliegenden Bauteil in ein seitens dieses Bauteils vorgesehenes Profil (23) eingreift und dabei eine drehfeste Koppelung der Struktur (15) mit diesem Bauteil herstellt, und wobei die Struktur (15) axial beidseitig mit radial verlaufenden Anlageflächen (18, 19) versehen ist,
   **dadurch gekennzeichnet, dass** eine Profilebene (22) des Mitnahmeprofils (17) gegenüber radialen Ebenen (20, 21) der Anlageflächen (18, 19) unter einem Winkel (φ) verkippt ist.

2. Vorrichtung (43; 57) zum Sichern eines Spannelements (38) gegen ungewolltes Lösen, mit einer scheibenförmigen Struktur (44; 58), welche von einer nicht kreisrunden Innenkontur (45) axial durchsetzt ist, wobei die Struktur (44; 58) an einer durch die Innenkontur (45; 59) definierten Fläche mit einem Mitnahmeprofil (46; 60) versehen ist, welches bei Platzierung der Struktur (44; 58) mit der Innenkontur (45; 59) auf einem radial innenliegenden Bauteil in ein seitens dieses Bauteils vorgesehenes Profil (35; 55) eingreift und dabei eine drehfeste Koppelung der Struktur (44; 58) mit diesem Bauteil herstellt, und wobei die Struktur (44; 58) axial beidseitig mit radial verlaufenden Anlageflächen (47, 48; 61, 62) versehen ist,
   **dadurch gekennzeichnet, dass** zumindest eine Profilebene (51; 65) des Mitnahmeprofils (46; 60) gegenüber radialen Ebenen (49, 50; 63, 64) der Anlageflächen (47, 48; 61, 62) unter einem Winkel (φ) verkippt ist.

3. Vorrichtung (14; 43; 57) nach Anspruch 1 oder 2, **dadurch gekennzeichnet, dass** der Winkel (φ) derartig gewählt ist, dass bei Anordnung der Struktur (15; 44; 58) auf dem Bauteil und Verkippen des Mitnahmeprofils (17; 46; 60) gegenüber dem Profil (23; 46; 60) des Bauteils in mindestens einem Umfangsbereich das Flankenspiel zwischen Mitnahmeprofil (17; 46; 60) und Profil (23; 46; 60) eliminiert wird.

4. Vorrichtung (14) nach Anspruch 1 und 3, **dadurch gekennzeichnet, dass** das Mitnahmeprofil (17) durch zumindest ein Einzelprofil gebildet ist, von dessen in Umfangsrichtung orientierten Flanken (24, 25) mindestens eine Flanke (24, 25) einen keilartigen Verlauf aufweist.

5. Vorrichtung (14) nach Anspruch 4, **dadurch gekennzeichnet, dass** das Mitnahmeprofil (17) als Verzahnung gestaltet ist.

6. Vorrichtung (14) nach Anspruch 5, **dadurch gekennzeichnet, dass** das Mitnahmeprofil (17) als Evolventenverzahnung ausgebildet ist.

7. Vorrichtung (14) nach Anspruch 6, **dadurch gekennzeichnet, dass** der Winkel (φ) berechnet ist nach

$$j_n - \left[ \left( d \cdot \sin\alpha_t - \frac{j_n}{2} \right) \cdot \cos\varphi + \frac{b}{2} \cdot \sin\varphi - \left( \left( d \cdot \sin\alpha_t \right) - \frac{j_n}{2} \right) \right] \leq 0 \, .$$

8. Vorrichtung (43) nach Anspruch 2 und 3, **dadurch gekennzeichnet, dass** das Mitnahmeprofil (46) als Zweiflach-Profil gestaltet ist.

9. Vorrichtung (57) nach Anspruch 2 und 3, **dadurch gekennzeichnet, dass** das Mitnahmeprofil (60) als Vierkant-Profil gestaltet ist.

10. Vorrichtung (14; 43; 57) nach einem der vorigen Ansprüche, **dadurch gekennzeichnet, dass** der Winkel (φ) mindestens 1,5 Grad beträgt.

11. Befestigungsanordnung, umfassend eine Welle (1; 28; 34; 54), auf welcher ein Spannelement (11; 29; 38) zur Erzeugung einer in axialer Richtung wirkenden Vorspannung geführt ist und eine nach einem oder mehrerer der Ansprüche 1 bis 10 gestaltete Vorrichtung (14; 43; 57) vorspannt,
    wobei diese Vorrichtung (14; 43; 47) an axial beidseitig vorgesehenen Anlageflächen (18, 19; 47, 48; 61, 62) einerseits mit dem Spannelement (11; 29: 38), sowie andererseits mit einer weiteren Komponente in Kontakt steht und mit einem Mitnahmeprofil (17; 46; 60) drehfest in ein Profil (23; 35; 55) seitens der Welle (1; 28; 34; 54) eingreift, welches mit Spielpassung korrespondierend zum Mitnahmeprofil (17; 46; 60) gestaltet ist, und wobei das Mitnahmeprofil (17; 46; 60) bei Vorspannung der Vorrichtung (14; 43; 57) über das Spannelement (11; 29; 38) gegenüber dem Profil (23; 35; 55) der Welle (1; 28; 34; 54) um einen Winkel (φ) verkippt ist, wodurch ein Flankenspiel zwischen Mitnahmeprofil (17; 46; 60) und Profile (23; 35; 55) in mindestens einem Bereich in Umfangsrichtung eliminiert ist.

**12.** Befestigungsanordnung nach Anspruch 11, **dadurch gekennzeichnet, dass** das Mitnahmeprofil (17) der Vorrichtung (14) und/oder das Profil (23) der Welle im Zuge des Vorspannens über das Spannelement (11; 29) und des Verkippens teilweise einer plastischen Verformung unterworfen ist.

**13.** Befestigungsanordnung nach Anspruch 11, **dadurch gekennzeichnet, dass** die Komponente ein Wälzlager ist, dessen axiale Vorspannung über das Spannelement (11) einstellbar ist.

**14.** Befestigungsanordnung nach Anspruch 11, **dadurch gekennzeichnet, dass** die Komponente ein Befestigungsflansch (27) ist.

**15.** Befestigungsanordnung nach Anspruch 11, **dadurch gekennzeichnet, dass** die Komponente ein Wählhebel (36) einer Gangwähleinrichtung (30) für ein Getriebe (26) ist.

**Claims**

**1.** Device (14) securing a clamping element (11; 29) against unintentional release, having a disc-like structure (15) which is pierced axially by a bore (16), wherein the structure (15) is provided with a driver profile (17) on an inner diameter which is defined by the bore (16) and which, when the structure (15) is placed with the bore (16) on a radially inner component, engages in a profile (23) provided on the part of this component and produces a co-rotational coupling of the structure (15) with this component, and wherein the structure (15) is provided axially on both sides with radially extending contact surfaces (18, 19), **characterized in that** a profile plane (22) of the driver profile (17) is tilted at an angle (φ) with respect to radial planes (20, 21) of the contact surfaces (18, 19).

**2.** Device (43; 57) for securing a clamping element (38) against unintentional release having a disc-like structure (44; 58) which is pierced axially by a non-circular inner contour (45), wherein the structure (44; 58) is provided on a surface defined by the inner contour (45; 59) with a driver profile (46; 60) which, when the structure (44; 58) is placed with the inner contour (45; 59) on a radially inner component, engages in a profile (35; 55) provided on the part of this component and produces a co-rotational coupling of the structure (44; 58) with this component, and wherein the structure (44; 58) is provided axially on both sides with radially extending contact surfaces (47, 48; 61, 62), **characterized in that** at least one profile plane (51; 65) of the driver profile (46; 60) is tilted at an angle (φ) with respect to radial planes (49, 50; 63, 64) of the contact surfaces (47, 48; 61, 62) .

**3.** Device (14; 43; 57) according to Claim 1 or 2, **characterized in that** the angle (φ) is chosen in such a way that when the structure (15; 44; 58) is arranged on the component and the driver profile (17; 46; 60) is tilted with respect to the profile (23; 46; 60) of the component, in at least one circumferential region the flank play between driver profile (17; 46; 60) and profile (23; 46; 60) is eliminated.

**4.** Device (14) according to Claim 1 and 3, **characterized in that** the driver profile (17) is formed by at least one individual profile, of the flanks (24, 25) of which oriented in the circumferential direction, at least one flank (24, 25) has a wedge-like course.

**5.** Device (14) according to Claim 4, **characterized in that** the driver profile (17) is configured as toothing.

**6.** Device (14) according to Claim 5, **characterized in that** the driver profile (17) is formed as involute toothing.

**7.** Device (14) according to Claim 6, **characterized in that** the angle (φ) is calculated according to:

$$j_n - \left[ \left( d \cdot \sin \alpha_t - \frac{j_n}{2} \right) \cdot \cos \varphi + \frac{b}{2} \cdot \sin \varphi - \left( \left( d \cdot \sin \alpha_t \right) - \frac{j_n}{2} \right) \right] \leq 0 \, .$$

8. Device (43) according to Claim 2 and 3, **characterized in that** the driver profile (46) is configured as a dihedral profile.

9. Device (57) according to Claim 2 and 3, **characterized in that** the driver profile (60) is configured as a square profile.

10. Device (14; 43; 57) according to one of the preceding claims, **characterized in that** the angle ($\varphi$) is at least 1.5 degrees.

11. Fixing arrangement comprising a shaft (1; 28; 34; 54), on which a clamping element (11; 29; 38) for producing a pre-tension acting in an axial direction is guided and pretensions a device (14; 43; 57) configured in accordance with one or more of Claims 1 to 10,
wherein this device (14; 43; 47) is in contact at contact surfaces (18, 19; 47, 48; 61, 62) provided axially on both sides on the one hand with the clamping element (11; 29; 38), and on the other hand with a further component and engages with a driver profile (17; 46; 60) co-rotationally in a profile (23; 35; 55) on the part of the shaft (1; 28; 34; 54), which is configured with a loose fit corresponding to the driver profile (17; 46; 60), and wherein the driver profile (17; 46; 60) when the device (14; 43; 57) is pretensioned via the clamping element (11; 29; 38) is tilted by an angle ($\varphi$) with respect to the profile (23; 35; 55) of the shaft (1; 28; 34; 54), by which means a flank play between driver profile (17; 46; 60) and profile (23; 35; 55) is illuminated in at least one region in the circumferential direction.

12. Fixing arrangement according to Claim 11, **characterized in that** the driver profile (17) of the device (14) and/or the profile (23) of the shaft is/are partly subjected to plastic deformation in the course of the pretensioning via the clamping element (11; 29) and the tilting.

13. Fixing arrangement according to Claim 11, **characterized in that** the component is a rolling bearing of which the axial pretension is adjustable via the clamping element (11).

14. Fixing arrangement according to Claim 11, **characterized in that** the component is a fixing flange (27).

15. Fixing arrangement according to Claim 11, **characterized in that** the component is a selector lever (36) of a gear selector device (30) for a transmission (26).

**Revendications**

1. Dispositif (14) de protection d'un élément de serrage (11 ; 29) contre tout desserrage involontaire, le dispositif comprenant une structure (15) en forme de disque qui est traversée axialement par un alésage (16), la structure (15) étant pourvue, au niveau d'un diamètre intérieur défini par l'alésage (16), d'un profil d'entraînement (17) qui, lors du placement de la structure (15) pourvue de l'alésage (16) sur un composant radialement intérieur, s'engage dans un profil (23) prévu du côté du composant et réalise ainsi un accouplement solidaire en rotation de la structure (15) avec ce composant, et la structure (15) étant pourvue axialement des deux côtés de surfaces d'appui (18, 19) s'étendant radialement,
**caractérisé en ce qu'**un plan (22) du profil d'entraînement (17) est incliné d'un angle ($\varphi$) par rapport à des plans radiaux (20, 21) des surfaces d'appui (18, 19).

2. Dispositif (43 ; 57) de protection d'un élément de serrage (38) contre tout desserrage involontaire, le dispositif comprenant une structure (44 ; 58) en forme de disque qui est traversée axialement par un contour intérieur (45) non circulaire, la structure (44 ; 58) étant pourvue, sur une surface définie par le contour intérieur (45 ; 59), d'un profil d'entraînement (46 ; 60) qui, lors du placement de la structure (44 ; 58) pourvue du contour intérieur (45 ; 59), sur un composant radialement intérieur, s'engage dans un profil (35 ; 55) prévu du côté de ce composant et réalise ainsi un accouplement solidaire en rotation de la structure (44 ; 58) avec ce composant, et la structure (44 ; 58) étant pourvue axialement des deux côtés de surfaces d'appui (47, 48 ; 61, 62) s'étendant radialement,
**caractérisé en ce qu'**au moins un plan de profilé (51 ; 65) du profilé d'entraînement (46 ; 60) est incliné d'un angle ($\varphi$) par rapport à des plans radiaux (49, 50 ; 63, 64) des surfaces d'appui (47, 48 ; 61, 62).

3. Dispositif (14 ; 43 ; 57) selon la revendication 1 ou 2, **caractérisé en ce que** l'angle ($\varphi$) est choisi de telle sorte que, lorsque la structure (15 ; 44 ; 58) est disposée sur le composant et que le profil d'entraînement (17 ; 46 ; 60) est basculé par rapport au profil (23 ; 46 ; 60) du composant dans au moins une région circonférentielle, le jeu des flancs entre le profilé d'entraînement (17 ; 46 ; 60) et le profil (23 ; 46 ; 60) est éliminé.

**4.** Dispositif (14) selon les revendications 1 et 3, **caractérisé en ce que** le profil d'entraînement (17) est formé par au moins un profil unique dont les flancs (24, 25), orientés dans la direction circonférentielle, au moins un flanc (24, 25) présente une forme en coin.

**5.** Dispositif (14) selon la revendication 4, **caractérisé en ce que** le profil d'entraînement (17) est réalisé sous la forme d'une denture.

**6.** Dispositif (14) selon la revendication 5, **caractérisé en ce que** le profil d'entraînement (17) est réalisé sous la forme d'une denture à développante.

**7.** Dispositif (14) selon la revendication 6, **caractérisé en ce que** l'angle ($\varphi$) est calculé selon

$$j_n - \left[ \left( d \cdot \sin \alpha_t - \frac{j_n}{2} \right) \cdot \cos \varphi + \frac{b}{2} \cdot \sin \varphi - \left( \left( d \cdot \sin \alpha_t \right) - \frac{j_n}{2} \right) \right] \le 0 \, .$$

**8.** Dispositif (43) selon les revendications 2 et 3, **caractérisé en ce que** le profil d'entraînement (46) est conçu comme un profil dièdre.

**9.** Dispositif (57) selon les revendications 2 et 3, **caractérisé en ce que** le profil d'entraînement (60) est réalisé sous la forme d'un profilé carré.

**10.** Dispositif (14 ; 43 ; 57) selon l'une des revendications précédentes, **caractérisé en ce que** l'angle ($\varphi$) est d'au moins 1,5 degré.

**11.** Ensemble de fixation comprenant un arbre (1 ; 28 ; 34 ; 54) sur lequel un élément de serrage (11 ; 29 ; 38) est guidé pour générer une précontrainte agissant dans la direction axiale et précontraint un dispositif (14 ; 43 ; 57) conçu selon l'une au moins des revendications 1 à 10, ledit dispositif (14 ; 43 ; 47) étant en contact d'un côté avec l'élément de serrage (11 ; 29: 38) sur des surfaces d'appui (18, 19 ; 47, 48 ; 61, 62) prévues axialement des deux côtés, et d'autre part étant en contact avec un autre composant, et s'engageant avec un profil d'entraînement (17 ; 46 ; 60) solidairement en rotation du côté de l'arbre (1 ; 28 ; 34 ; 54) dans un profil (23 ; 35 ; 55) qui est conçu avec un ajustement de jeu correspondant au profil d'entraînement (17 ; 46 ; 60) et, lors de la précontrainte du dispositif (14 ; 43 ; 57) par le biais de l'élément de serrage (11 ; 29 ; 38), le profil d'entraînement (17 ; 46 ; 60) étant incliné d'un angle ($\varphi$) par rapport au profil (23 ; 35 ; 55) de l'arbre (1 ; 28 ; 34 ; 54), ce qui élimine le jeu des flancs entre le profilé d'entraînement (17 ; 46 ; 60) et des profils (23 ; 35 ; 55) dans au moins une région dans la direction circonférentielle.

**12.** Ensemble de fixation selon la revendication 11, **caractérisé en ce que**, au cours de la précontrainte par le biais de l'élément de serrage (11 ; 29) et du basculement, le profil d'entraînement (17) du dispositif (14) et/ou le profil (23) de l'arbre sont soumis partiellement à une déformation plastique.

**13.** Ensemble de fixation selon la revendication 11, **caractérisé en ce que** le composant est un palier à roulement dont la précontrainte axiale est réglable par le biais de l'élément de serrage (11).

**14.** Ensemble de fixation selon la revendication 11, **caractérisé en ce que** le composant est une bride de fixation (27).

**15.** Ensemble de fixation selon la revendication 11, **caractérisé en ce que** le composant est un levier sélecteur (36) d'un dispositif de sélection de vitesse (30) destiné à une transmission (26).

Fig. 1

Fig. 2

Fig. 3

24   17   25

Fig. 4

26   14   27   29   28

Fig. 5

(Stand der Technik) Fig. 6A

Fig. 6B

(Stand der Technik)

Fig. 7

A-A

Fig. 8

EP 3 143 294 B1

55    54    56

56  54  55

Fig. 9A

56

54  30  36    57  38

Fig. 9B

22

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013213514 A1